# EUROPEAN PATENT APPLICATION

(11) **EP 4 597 611 A1**
(43) Date of publication of application: **06.08.2025**
(21) Application number: 25154366.6
(22) Date of filing: 28.01.2025
(51) Int. Cl.: H01M 4/131, H01M 4/36, H01M 4/505, H01M 4/525, H01M 10/0525, H01M 4/02

(54) **POSITIVE ELECTRODE ACTIVE MATERIALS, POSITIVE ELECTRODES, AND RECHARGEABLE LITHIUM BATTERIES**

(30) Priority: 30.01.2024 KR 20240014281
(71) Applicant: SAMSUNG SDI CO., LTD., Yongin-si, Gyeonggi-do 17084 (KR)
(72) Inventor: KIM, Young-Ki, 17084 Yongin-si (KR); CHOO, Sung Ho, 17084 Yongin-si (KR); KANG, Seok Mun, 17084 Yongin-si (KR); KONG, Youngsun, 17084 Yongin-si (KR); YOON, Jaesang, 17084 Yongin-si (KR); KANG, Byungwuk, 17084 Yongin-si (KR); JUN, Dowook, 17084 Yongin-si (KR); JEONG, Jaeyong, 17084 Yongin-si (KR)
(74) Representative: Marks & Clerk LLP

(57) **Abstract**

A positive electrode active material includes: (a) a first positive electrode active material, including a first layered lithium nickel-manganese-based composite oxide, in a form of secondary particles in which a plurality of primary particles are agglomerated; (b) a second positive electrode active material, including a second layered lithium nickel-manganese-based composite oxide, the second positive electrode active material having a smaller average particle diameter (D₅₀) than the first positive electrode active material, and the second positive electrode active material being in a form of single particles; and (c) a third positive electrode active material, including a lithium-manganese-rich composite oxide, in which a molar ratio of lithium to a total metal content of the lithium-manganese-rich composite oxide excluding lithium is about 1.1 to about 3 and a manganese content based on 100 mol% of the total metal content of the lithium-manganese-rich composite oxide excluding lithium is greater than or equal to about 60 mol%, the third positive electrode active material being in a form of single particles. Also disclosed are a positive electrode and a rechargeable lithium battery, each using the positive electrode active material

## Description

### BACKGROUND

### Field

Positive electrode active materials, positive electrodes including the same, and rechargeable lithium batteries are disclosed.

### Description of the Related Art

Portable information devices such as cell phones, laptop computers, smart phones, and the like and electric vehicles use rechargeable lithium batteries having high energy density and easy portability as a driving power source. Recently, further research has been conducted into use of a rechargeable lithium battery with high energy density as a driving power source or power storage power source for hybrid or electric vehicles.

Various positive electrode active materials have been investigated to achieve rechargeable lithium batteries for applications in these uses. Lithium nickel-based oxide, lithium nickel-manganese-cobalt-based composite oxide, lithium nickel-cobalt-aluminium-based composite oxide, and lithium cobalt-based oxide are mainly used as positive electrode active materials. However, while the demand for large-sized, high-capacity, or high-energy-density rechargeable lithium batteries has recently increased, there is an expectation that future supplies of positive electrode active materials containing cobalt, a rare metal, will be short. Thus, because cobalt is expensive and there are not many remaining reserves of it, there is a need for developing positive electrode active materials that exclude cobalt or reduce the amount of cobalt used.

### SUMMARY

The present inventions seeks to provide a positive electrode active material that has high density, high capacity, long cycle-life, and high energy density characteristics, as well as a positive electrode and a rechargeable lithium battery using the same.

In a first aspect the present invention provides a positive electrode active material, which includes: (a) a first positive electrode active material including a first layered lithium nickel-manganese-based composite oxide, the first positive electrode active material being in a form of secondary particles, in which a plurality of primary particles are agglomerated; (b) a second positive electrode active material including a second layered lithium nickel-manganese-based composite oxide, the second positive electrode active material having a smaller average particle diameter (D₅₀) than the first positive electrode active material, and the second positive electrode active material being in a form of single particles; and (c) a third positive electrode active material including a lithium-manganese-rich composite oxide, in which a molar ratio of lithium to a total metal content of the lithium-manganese-rich composite oxide excluding lithium is about 1.1 to about 3 and a manganese content based on 100 mol% of the total metal content of the lithium-manganese-rich composite oxide excluding lithium is greater than or equal to about 60 mol%, and third positive electrode active material being in a form of single particles.

In a second aspect the present invention provides a positive electrode, which includes a positive electrode current collector, and a positive electrode active material layer on the positive electrode current collector, wherein the positive electrode active material layer includes the positive electrode active material of the first aspect of the invention.

In a third aspect the present invention provides a rechargeable lithium battery including the positive electrode of the second aspect of the invention, a negative electrode, and an electrolyte.

The positive electrode active material according to some embodiments maximizes capacity while minimizing production cost, ensures long cycle-life, and improves high-voltage characteristics and high-temperature storage characteristics. A rechargeable lithium battery using the positive electrode active material can exhibit high initial charge and discharge capacity and efficiency even under high-voltage operating conditions, and can achieve high energy density and long cycle-life characteristics due to high pellet density.

At least some of the above and other features of the invention are set out in the claims.

### BRIEF DESCRIPTION OF THE DRAWINGS

FIGS. 1 to 4 are views of a lithium rechargeable battery according to some embodiments.
FIGS. 5 and 6 are scanning electron microscope (SEM) images of the first positive electrode active material prepared in Example 1.
FIGS. 7 and 8 are SEM images of the second positive electrode active material prepared in Example 1.
FIGS. 9 and 10 are SEM images of the third positive electrode active material prepared in Example 1.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein to describe embodiments is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like, of the constituents.

Herein, it should be understood that terms such as "comprises", "includes", or "have" are intended to designate the presence of an embodied feature, number, step, element, or a combination thereof, but the terms do not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscopic image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscopic image.

Herein, "or" is not to be construed as an exclusive meaning, for example, "A or B" is construed to include A, B, A+B, and the like.

"Metal" is interpreted as a concept including ordinary metals, transition metals, and metalloids (semi-metals).

### Positive Electrode Active Material

A positive electrode active material according to the invention includes: (a) a first positive electrode active material, including a first layered lithium nickel-manganese-based composite oxide, which is in a form of secondary particles in which a plurality of primary particles are agglomerated; (b) a second positive electrode active material, including a second layered lithium nickel-manganese-based composite oxide, having a smaller average particle diameter (D₅₀) than the first positive electrode active material, and which is in a form of single particles; and (c) a third positive electrode active material, including a lithium-manganese-rich composite oxide in which a molar ratio of lithium to a total metal content of the lithium-manganese-rich composite oxide excluding lithium is about 1.1 to about 3 and a manganese content based on 100 mol% of a total metal content of the lithium-manganese-rich composite oxide excluding lithium is greater than or equal to about 60 mol%, and which is in a form of single particles.

The positive electrode active material does not include expensive cobalt or only contains a very small amount of cobalt and also low-cost manganese. Thus, cost is lowered and mass production may be increased, and, in addition, excellent characteristics, such as high-density characteristics at a high voltage and further increased capacity, can be achieved. The positive electrode active material is advantageous in that it is capable of achieving high capacity as well as high pellet density and maximizing battery energy density. Such a positive electrode active material is inexpensive and also satisfies high capacity, high voltage, and high-density characteristics. If a rechargeable lithium battery using the positive electrode active material is mounted on an electric vehicle or a hybrid vehicle, long-distance driving may be achieved.

The first layered lithium nickel-manganese-based composite oxide of the first positive electrode active material may have the same or a different chemical composition to the second layered lithium nickel-manganese-based composite oxide of the second positive electrode active material. In some embodiments, the first and second layered lithium nickel-manganese-based composite oxides may be identical in their chemical composition; in other embodiments, the first and second layered lithium nickel-manganese-based composite oxides may have different chemical compositions.

Based on a total of 100 wt% of the first positive electrode active material, the second positive electrode active material, and the third positive electrode active material combined, the first positive electrode active material may be included in an amount of about 30 wt% to about 90 wt%, for example, about 35 wt% to about 75 wt%, or about 40 wt% to about 60 wt%. The second positive electrode active material may be included in an amount of about 5 wt% to about 40 wt%, for example, about 10 wt% to about 30 wt%, or about 20 wt% to about 26 wt%. The third positive electrode active material may be included in an amount of about 5 wt% to about 30 wt%, for example, 7.5 wt% to 25 wt%, or 10 wt% to 20 wt%. When mixed in the above ratios, high capacity can be achieved while maximizing energy density.

### Lithium Nickel-Manganese Based Composite Oxide

As the price of cobalt, a rare metal, has recently sharply risen, there is a demand for the development of positive electrode active materials that exclude cobalt or reduce its content. Among the alternatives, a positive electrode active material having an olivine crystal structure such as lithium iron phosphate (LFP), lithium manganese phosphate (LMP), lithium manganese iron phosphate (LMFP), and the like, or a spinel crystal structure, such as lithium manganese oxide (LMO), and the like, are limited in their ability to achieve high capacity due to a small amount of lithium available within the structure. A layered lithium nickel-manganese-based positive electrode active material has excellent capacity and efficiency characteristics due to the high amount of lithium available in the structure, making it suitable as a material for high-capacity batteries. However, as cobalt, which plays a key role in the layered structure, is removed, structural stability decreases, resistance increases, and it becomes difficult to secure long cycle-life characteristics. In addition, a layered lithium nickel-manganese-based positive electrode active material, from which cobalt is excluded, may have a problem of an accelerated side reaction with an electrolyte under high-voltage and high-temperature conditions, resulting in increased gas generation and deteriorating cycle-life characteristics.

Accordingly, in some embodiments, the ratio of nickel and manganese in the first and/or second lithium nickel-manganese-based composite oxides may be appropriately adjusted, other elements such as aluminium may be introduced in addition to nickel and manganese, or a uniform coating layer may be introduced by applying an appropriate coating method, thereby providing a method of improving capacity and cycle-life characteristics of a positive electrode active material at high voltage.

In the first and/or second layered lithium nickel-manganese-based composite oxide, a nickel content may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal excluding lithium in said layered lithium nickel-manganese-based composite oxide(s). If the nickel content satisfies the above ranges, high capacity may be achieved and structural stability may be increased even if the cobalt content is reduced.

A manganese content may be, for example, greater than or equal to about 15 mol%, for example, about 15 mol% to about 40 mol%, about 15 mol% to about 35 mol%, about 15 mol% to about 30 mol%, or about 20 mol% to about 30 mol% based on 100 mol% of a total metal excluding lithium in the first and/or second layered lithium nickel-manganese-based composite oxide(s). If the manganese content satisfies the above ranges, the positive electrode active material may improve structural stability while realizing high capacity.

The first and/or second lithium nickel-manganese-based composite oxide(s) may be a lithium nickel-manganese-aluminium-based composite oxide that further includes aluminium in addition to nickel and manganese. If the first and/or second lithium nickel-manganese-based composite oxide contains aluminium, it is advantageously maintains a stable layered structure even if the cobalt element is excluded from the structure. An aluminium content based on 100 mol% of said lithium nickel-manganese-aluminium-based composite oxide(s) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol%. If the aluminium content satisfies the above ranges, a stable layered structure may be maintained even if cobalt is excluded, the problem of structure collapse due to charging and discharging may be suppressed, and long cycle-life characteristics of the positive electrode active material may be achieved.

According to some embodiments, a concentration of aluminium in particles including the first and/or second lithium nickel-manganese-based composite oxide(s) may be uniform. Uniform means that there is no concentration gradient of aluminium from the centre to the surface within the particle, or an aluminium concentration on the outside of the particle is neither higher nor lower than on the inside, and that the aluminium within the particle is evenly distributed. This structure may be obtained by synthesizing a first and/or second lithium nickel-manganese-based composite oxide using nickel-manganese-aluminium-based hydroxide as a precursor, and by using aluminium raw materials during precursor production without additional doping of aluminium during the synthesis of said lithium nickel-manganese-based composite oxide(s). The particles may be in a form of secondary particles in which a plurality of primary particles are agglomerated, and the aluminium content inside the primary particles may be the same or similar regardless of the location of the primary particles. That is, if a primary particle is selected at a random position in the cross-section of a secondary particle and the aluminium content is measured inside the primary particle rather than at its interface, regardless of the location of the primary particle, that is, whether the primary particle is close to the centre of the secondary particle or close to the surface, the aluminium content may be the same/similar/uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can be improved.

Each of the first and/or second layered lithium nickel-manganese-based composite oxide(s) may be specifically and individually represented by Chemical Formula 1:

[Chemical Formula 1] Liₐ₁Niₓ₁Mn_{y1}Al_{z1}M¹_{w1}O_{2-b1}X_{b1}

wherein, in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, Zn and Zr, and X is one or more elements selected from F, P, and S.

For example, in Chemical Formula 1, 0.9≤a1 ≤1.5, or 0.9≤a1 ≤1.2. Additionally, Chemical Formula 1 may include aluminium, in which case 0.6≤x1≤0.8, 0.1≤y1≤0.39, 0.01≤z1≤0.03, and 0≤w1≤0.29, may be satisfied, or, for example, 0.6≤x1≤0.8, 0.1≤y1≤0.39, 0.01<z1≤0.03, and 0≤w1≤0.29 may be satisfied.

In Chemical Formula 1, for example, 0.6≤x1≤0.79, 0.6≤x1≤0.78, 0.6≤x1≤0.75, 0.65≤x1≤0.8, or 0.7≤x1≤0.79; 0.1≤y1≤0.35, 0.1≤y1≤0.30, 0.1≤y1≤0.29, 0.15≤y1≤0.39, or 0.2≤y1≤0.3; 0.01≤z1≤0.025, 0.01<z1≤0.02, or 0.01<z1≤0.019; and 0≤w1≤0.28, 0≤w1≤0.27, 0≤w1≤0.26, 0≤w1≤0.25, 0≤w1≤0.24, 0≤w1≤0.23, 0≤w1≤0.22, 0≤w1≤0.21, 0≤w1≤0.2, 0≤w1≤0.15, 0≤w1≤0.1, or 0≤w1≤0.09.

The first and/or second lithium nickel-manganese-based composite oxide(s) may exclude cobalt, or may include a small amount of cobalt such that a cobalt content may be about 0 mol% to about 0.01 mol% based on 100 mol% of a total metal excluding lithium.

The particles including the first and/or second layered lithium nickel-manganese composite oxide(s) may be in a form of secondary particles made by agglomerating a plurality of primary particles, single particles, or a combination thereof. The secondary particles and single particles may be spherical, elliptical, polyhedral, or irregular in shape, and primary particles may be spherical, elliptical, plate-shaped, or a combination thereof.

### Coating Layer

The first positive electrode active material and/or the second positive electrode active material may include core particle(s) including the respective first/second layered lithium nickel-manganese-based composite oxide, and a coating layer located on the surface(s) of the core particle(s), said coating layer including Al, B, Mg, Ti, V, W, Y, Zr, and/or a combination thereof.

When a battery is operated under high-voltage or high-temperature conditions, the layered lithium nickel-manganese-based composite oxide is susceptible to chemical attacks from components in an electrolyte. Thus, there may be side reactions with the electrolyte, resulting in an increase in an amount of gas generated, thereby deteriorating battery cycle-life and safety. But these problems may be solved by introducing a coating layer according to embodiments of the present disclosure.

Because a layered lithium nickel-manganese-based composite oxide may have significantly different residual lithium contents on the particle surfaces and different characteristics from oxides with a different composition, such as lithium nickel-cobalt-manganese-based composite oxide, lithium nickel-cobalt-aluminium-based composite oxide, lithium cobalt-based oxide, etc., it may not be possible to form a satisfactory coating layer in the form of a uniform film using a conventional coating method. However, in some embodiments, a uniform coating layer may be introduced into the first positive electrode active material and/or second positive electrode active material through a method of: (i) first adding coating raw materials to an aqueous solvent, and then mixing them to prepare a coating solution in which the salts are completely dissolved in a salt-dissolution method, (ii) mixing the coating solution with core particles to proceed with coating, and (iii) removing the solvent, then drying and heat-treating the residue. This method is a salt-dissolution wet coating method and a pre-emptive method of first dissolving the salts of the coating raw materials and then adding the active material particles thereto. Through this method, the coating layer may be successfully formed as a uniform thin film on the surface of the layered lithium nickel-manganese-based composite oxide.

Compared to a general dry method or post-addition wet method, in a coating method according to the present disclosure, a content of coating elements on the active material surface may be further increased. For example, when measured using an energy-dispersive X-ray spectroscopy (EP-EDS) analysis, the coating content on the surfaces of the first positive electrode active material and/or the second positive electrode active material may be about 5 atomic percent (at%) to about 35 at%, for example, about 5 at% to about 30 at%, about 5 at% to about 25 at%, about 5 at% to about 20 at%, or about 10 at% to about 20 at% based on about 100 at% of total metal excluding lithium on the surface. Within these ranges, the coating layer may effectively improve high voltage characteristics without increasing resistance of the positive electrode active material.

The coating layer may be in the form of a film that continuously surrounds the surface of the core particles, for example, in the form of a shell that surrounds the whole surfaces of the core particles. This is distinct from a coating structure in which portions of the surfaces of the core particles are coated. According to some embodiments, the coating layer may be formed to entirely cover the surfaces of the core particles and have a very thin and uniform thickness, improving structural stability of the positive electrode active material without increasing resistance or deteriorating capacity, effectively suppressing side reactions with an electrolyte, and reducing an amount of gas generated. Thus, long cycle-life characteristics under high voltage and high temperature conditions may be achieved.

According to the method, the coating layer of the first positive electrode active material and/or the second positive electrode active material may have a thickness of about 5 nm to about 200 nm, for example, about 5 nm to about 150 nm, about 5 nm to about 100 nm, about 5 nm to about 80 nm, about 5 nm to about 50 nm, or about 10 nm to about 50 nm. If the coating layer satisfies these thickness ranges, the structural stability of the positive electrode active material may be improved without increasing resistance or decreasing capacity due to the coating, and side reactions with an electrolyte may be suppressed. The thickness of the coating layer can be measured through scanning electron microscopy (SEM), transmission electron microscopy (TEM), time-of-flight secondary ion mass spectrometry (TOF-SIMS), X-ray photoelectron spectroscopy (XPS), or energy dispersive X-ray spectrometer (EDS) analysis, for example, and can be measured through EDS line profile analysis of the cross-section of the positive electrode active material.

The coating layer according to some embodiments may be thin and uniform in thickness, at the level of tens to hundreds of nanometers. For example, a deviation in a coating layer thickness in one positive electrode active material particle may be less than or equal to about 20%, less than or equal to about 18%, or less than or equal to about 15%. Herein, the deviation in the coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above ranges means that a coating layer of uniform thickness may be formed as a film on the surfaces of the positive electrode active material particles. Accordingly, the structural stability of the positive electrode active material may be improved, side reactions with the electrolyte may be effectively suppressed, and an increase in resistance or decrease in capacity due to coating may be minimized.

Based on 100 mol% of the total metal excluding lithium in the first positive electrode active material and/or the second positive electrode active material, the content of coating elements varies depending on types of the coating elements but may be about 0.01 mol% to about 5 mol%, for example, about 0.05 mol% to about 3 mol%, or about 0.1 mol% to about 2 mol%.

If an Al coating layer is introduced, an Al content of the coating layer may be about 0.1 mol% to about 3.0 mol%, for example, about 0.1 mol% to about 2.0 mol%, about 0.5 mol% to about 1.5 mol%, or about 0.7 mol% to about 1.3 mol% based on about 100 mol% of the total metal excluding lithium in the first positive electrode active material.

The Al coating layer may, for example, include a layered aluminium compound such as aluminium oxide, lithium-aluminium oxide, and/or a combination thereof, a specific example of which is LiAlO₂.

### First Positive Electrode Active Material

The first positive electrode active material includes a first layered lithium nickel-manganese-based composite oxide and is in a form of secondary particles in which a plurality of primary particles are agglomerated. Herein, the secondary particles may be spherical, elliptical, polyhedral, or irregular in shape, and the primary particles may be spherical shape, an elliptical sphere, a plate shape, or a combination thereof.

An average particle diameter (D₅₀) of the first positive electrode active material may be about 10 µm to about 25 µm, for example about 11 µm to about 20 µm, or about 12 µm to about 18 µm. As used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image for positive electrode active materials.

The first positive electrode active material may include core particles in the form of secondary particles in which a plurality of primary particles are agglomerated, and a coating layer may be located on the surfaces of the core particles and include Al, B, Mg, Ti, V, W, Y, Zr, or a combination thereof.

The core particles of the first positive electrode active material may include Al, Zr, or a combination thereof, and the coating layer of the first positive electrode active material may include Al, and the Al content of the coating layer may be about 0.5 mol% to about 2 mol% based on 100 mol% of a total metal excluding lithium coating layer in the first positive electrode active material. This may be an optimal coating component in the first positive electrode active material, which may further improve capacity characteristics and cycle-life characteristics at high voltage.

### Second Positive Electrode Active Material

The second positive electrode active material includes the second layered lithium nickel-manganese-based composite oxide, has a smaller average particle diameter (D₅₀) than the first positive electrode active material, and is in a form of single particles. Herein, the single particles may have a spherical shape, an elliptical sphere, a plate shape, an irregular shape, or a combination thereof.

An average particle diameter of the second positive electrode active material may be, for example, about 0.5 µm to about 8 µm, about 1 µm to about 7 µm, or about 1 µm to about 5 µm.

The second positive electrode active material may include core particles in the form of single particles, and a coating layer located on the surfaces of the core particles. The core particles may include Al, B, Mg, Ti, V, W, Y, Zr, and/or a combination thereof. The coating layer of the second positive electrode active material may include Al, Y, or a combination thereof. An Al content of the coating layer based on 100 mol% of a total metal excluding lithium in the second positive electrode active material may be about 0.1 mol% to about 1 mol%, and an Y content of the coating layer based on 100 mol% of a total metal excluding lithium in the second positive electrode active material may be about 0.01 mol% to about 0.5 mol%. These may be optimal coating components in the second positive electrode active material, which may further improve capacity characteristics and cycle-life characteristics at high voltage.

Based on a total of 100 wt% of the first positive electrode active material and the second positive electrode active material, the first positive electrode active material may be included in an amount of about 60 wt% to about 95 wt%, or about 70 wt% to about 90 wt%, and the second positive electrode active material may be included in an amount of about 5 wt% to about 40 wt%, or about 10 wt% to about 30 wt%. When mixed in the above ratios, high capacity can be achieved while maximizing energy density.

### Third Positive Electrode Active Material

The third positive electrode active material includes a lithium-manganese-rich (LMR) composite oxide in which a molar ratio of lithium to a total metal excluding lithium in the lithium-manganese-rich composite oxide is about 1.1 to about 3 and a manganese content based on 100 mol% of a total metal excluding lithium in the lithium-manganese-rich composite oxide is greater than or equal to about 60 mol%, and is in a form of single particles. Herein, the single particles may have a spherical shape, an elliptical sphere, a plate shape, an irregular shape, and/or a combination thereof.

The LMR composite oxide, which is a layered positive electrode active material including lithium in an excessive content and manganese in a relatively high content, achieves high capacity by applying a new principle of oxidation-reduction of oxygen as well as conventionally achieves capacity by oxidation-reduction of transition metals. The LMR composite oxide may be an ultra-low-cost and next generation positive electrode active material due to its high ratio of low-cost manganese.

In the lithium-manganese-rich composite oxide of the third positive electrode active material, a molar ratio of lithium to the total metal excluding the lithium in the lithium-manganese-rich composite oxide is about 1.1 to about 3, for example, about 1.2 to about 2.5, about 1.3 to about 2.3, or about 1.5 to about 2.1. In addition, in the third positive electrode active material, based on 100 mol% of the total metal content of the lithium-manganese-rich composite oxide excluding lithium, a content of the manganese is greater than or equal to about 60 mol%, for example, about 60 mol% to about 90 mol%, about 60 mol% to about 80 mol%, about 60 mol% to about 75 mol%, about 60 mol% to about 70 mol%, or about 62 mol% to about 68 mol%.

The lithium-manganese-rich composite oxide of the third positive electrode active material may be represented, for example, by Chemical Formula 2:

[Chemical Formula 2] Li₁₊ₓ₂(Ni_{y2}Mn_{z2}M²_{1-y2-z2})₁₋ₓ₂O_{2-b2}X_{b2}

wherein, in Chemical Formula 2, 0.04≤x2≤0.5, 0.1≤y2≤0.5, 0.5≤z2≤0.9, 0.9≤y2+z2≤1.1, and 0≤b2≤0.1, M² is one or more elements selected from Al, B, Ba, Ca, Ce, Cr, Fe, Mg, Mo, Nb, Si, Sn, Sr, Ti, V, W, Y, Zn and Zr, and X is one or more elements selected from F, P, and S.

For example, in Chemical Formula 2, 0.05≤x2≤0.4, or 0.06≤x2≤0.3, 0.2≤y2≤0.4 and 0.6≤z2≤0.8, or 0.3≤y2≤0.4 and 0.6≤z2≤0.7.

The third positive electrode active material may be in a form of a single particles, and the average particle diameter (D₅₀) of the third positive electrode active material may be smaller than the average particle diameter of the first positive electrode active material and/or the second positive electrode active material, and may be, for example, about 0.1 µm to about 5 µm, about 0.5 µm to about 4 µm, or about 1 µm to about 3 µm. That is, the positive electrode can be a mixture of the first positive electrode active material, which is large particles, the second positive electrode active material which is middle-sized particles, and the third positive electrode active material which is small particles, and accordingly, high-voltage characteristics can be effectively improved while maximizing energy density.

In the lithium-manganese-rich composite oxide of the third positive electrode active material, a cobalt content may be about 0 mol% to about 0.01 mol% based on 100 mol% of a total metal content of the lithium-manganese-rich composite oxide excluding lithium.

The third positive electrode active material may have a surface residual lithium content of less than or equal to about 0.3 wt%, for example, less than or equal to about 0.2 wt%, less than or equal to about 0.1 wt%, or about 0.001 wt% to about 0.1 wt%. This may be distinguished from high-nickel-based materials with a nickel content exceeding about 70 mol%.

The third positive electrode active material may have an a lattice constant of about 2.860 Å or more, for example, about 2.865 Å or more, about 2.870 Å or more, or about 2.875 Å to about 2.885 Å in X-ray diffraction analysis (XRD). For example, the positive electrode active material may have an a lattice constant of greater than or equal to about 2.875 Å. In addition, a ratio of the c lattice constant to the a lattice constant may be less than or equal to about 4.968, for example, less than or equal to about 4.965, less than or equal to about 4.960, or about 4.955 to about 4.965. If the a lattice constant and the ratio of the c lattice constant to the a lattice constant of the positive electrode active material respectively satisfy the ranges, a voltage drop problem during charging and discharging due to the third positive electrode active material may be effectively prevented, energy density may be increased, and capacity characteristics and cycle-life characteristics in a high voltage region may be improved.

### Pellet Density

The positive electrode active material according to some embodiments may have a high pellet density. For example, the pellet density of the positive electrode active material may be about 3.0 g/cc to about 3.7 g/cc, for example about 3.1 g/cc to about 3.6 g/cc, about 3.1 g/cc to about 3.5 g/cc, about 3.3 g/cc to about 3.7 g/cc, or about 3.4 g/cc to about 3.6 g/cc. A rechargeable lithium battery to which such a positive electrode active material is applied may achieve high energy density.

The pellet density may be measured by the following method. The positive electrode active material is weighed, 3 g of the material is then put into a mold (having an area of about 1.298 cm²), and a mold bar is slowly inserted into a mold body. After placing the mold set in a hydraulic press and pressing it with a pressure of about 4 tons (Metric ton) for about 30 seconds, its height is measured to obtain the pellet density.

### Positive Electrode

According to the invention there is provided a positive electrode, which includes a positive electrode current collector and a positive electrode active material layer on the positive electrode current collector, wherein the positive electrode active material layer includes the aforementioned positive electrode active material. The positive electrode active material layer may further include other types of positive electrode active materials in addition to the aforementioned positive electrode active material. Additionally, the positive electrode active material layer may optionally include a binder, a conductive material, and/or a combination thereof.

According to some embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². Additionally, a density of the positive electrode active material layer in the final compressed positive electrode may be about 3.3 g/cc to about 3.7 g/cc, for example about 3.3 g/cc to about 3.6 g/cc or about 3.4 g/cc to about 3.58 g/cc. When applying the positive electrode active material according to some embodiments, it is advantageous to implement such a loading level and positive electrode density, because a positive electrode that satisfies the loading level and positive electrode density in the above ranges is suitable for use in and achievement of a high-capacity, high-energy-density rechargeable lithium battery.

### Binder

The binder may improve the binding properties of positive electrode active material particles with one another and with a current collector. Examples of binders that may be used in embodiments include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material may be included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a mixture thereof.

The content of each of the binder and the conductive material may be about 0.5 wt% to about 5 wt% based on 100 wt% of the positive electrode active material layer.

The positive electrode current collector may include Al foil, and the like, but is not limited thereto.

### Rechargeable Lithium Battery

According to the invention there is provided a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

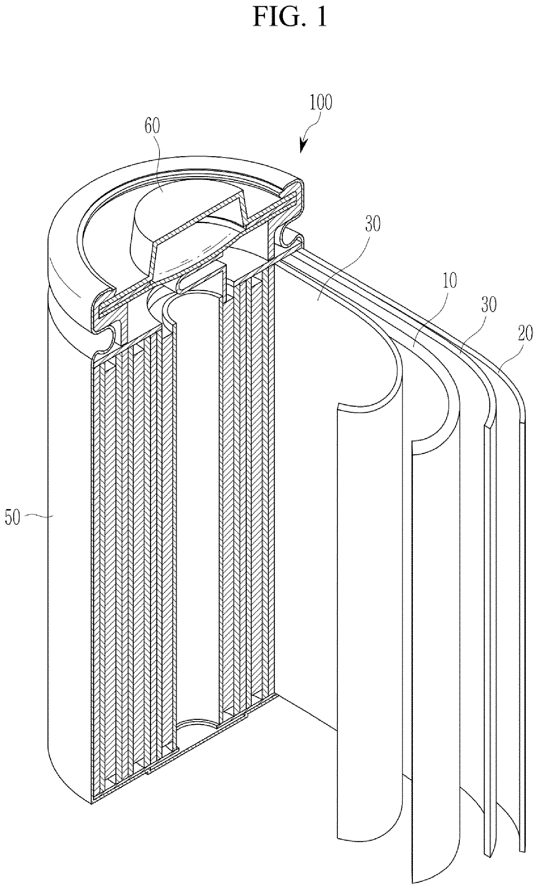

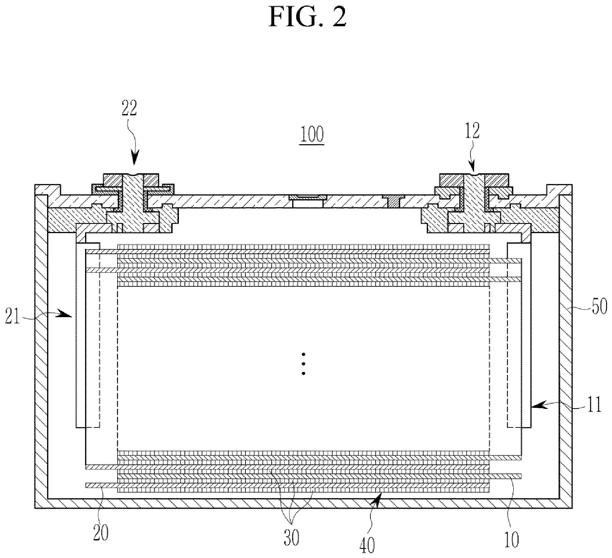

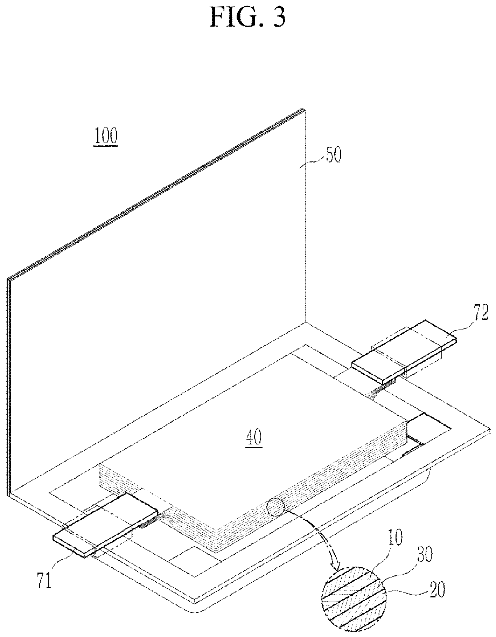

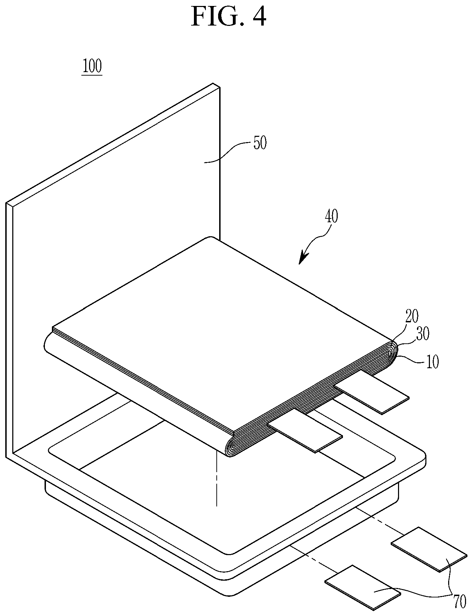

The rechargeable lithium battery may be classified into cylindrical, prismatic, pouch, coin, etc. depending on the shape. FIGS. 1 to 4 are schematic views showing a rechargeable lithium battery according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery according to some embodiments may be rechargeable at a high voltage or suitable for being driven at the high voltage, and exhibit improved characteristics under high voltage conditions.

The rechargeable lithium battery includes the aforementioned third positive electrode active material of lithium-manganese-rich composite oxide; in order to make use of the reversible positive electrode capacity of the third positive electrode active material, it may be necessary to perform initial charging at an upper limit voltage of greater than or equal to about 4.60 V, for example, at about 4.65 V. Although subsequent charging may be performed at a lower voltage than the initial upper limit voltage, the rechargeable lithium battery according to some embodiments, which is designed to be driven in a high voltage region, may be subsequently charged in a voltage range of greater than or equal to about 4.45 V. For example, after the second cycle, a charging voltage may be greater than or equal to about 4.45 V, for example, about 4.45 V to about 4.6 V, about 4.45 V to about 4.55 V, or about 4.45 V to about 4.50 V. By applying the positive electrode active material according to the invention, a rechargeable lithium battery comprising said material can generate a significantly reduced amount of gas, even when charged at high voltage, and can achieve high capacity and long cycle-life characteristics.

### Negative Electrode

A negative electrode may include a current collector and a negative electrode active material layer on the current collector, and the negative electrode active material layer may further include a negative electrode active material, a binder, a conductive material, and/or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, and/or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof), and/or a combination thereof. The Sn-based negative electrode active material may be Sn, SnO₂, a Sn alloy, and/or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In addition, when the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, and/or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative; and/or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether group), and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinyl ethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ion conductivity and viscosity, and, thus, excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefins such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON^{™}), or a copolymer and/or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Preparation of Positive Electrode Active Material

### Preparation of First Positive Electrode Active Material

Ni_{0.75}Mn_{0.23}Al_{0.02}(OH)₂ and LiOH were mixed in a molar ratio of 1:1.05 and heat-treated in a first heating step at 845 °C in an oxygen atmosphere for 8 hours to prepare a first lithium nickel-manganese-based composite oxide in a form of secondary particles having a composition of Li_{1.05}Ni_{0.75}Mn_{0.23}Al_{0.02}O₂ and an average particle diameter (D₅₀) of about 14 µm.

Aluminium sulfate was added to a distilled water solvent and then stirred at about 350 rpm for about 5 minutes to prepare a coating solution. It was confirmed that the salt was completely dissolved in the coating solution, which became colorless and transparent. Subsequently, 500 g of the first lithium nickel-manganese-based composite oxide was added to the coating solution over a 1.5 minute time period, while continuously stirring the coating solution, and then further stirred for about 45 minutes. Herein, an aluminium content in the aluminium sulfate was designed to be 1.0 mol% based on 100 mol% of total metal excluding lithium in final large particles. After completing the stirring, a supernatant thereof was confirmed to have a pH of 5.5. After removing the solvent from the mixed solution by using an aspirator and a filter press, a coated product was obtained by vacuum-drying at 190 °C.

The coated product was then heat-treated in a second heating step at 750 °C for 8 hours in an oxygen atmosphere, thereby preparing a first positive electrode active material.

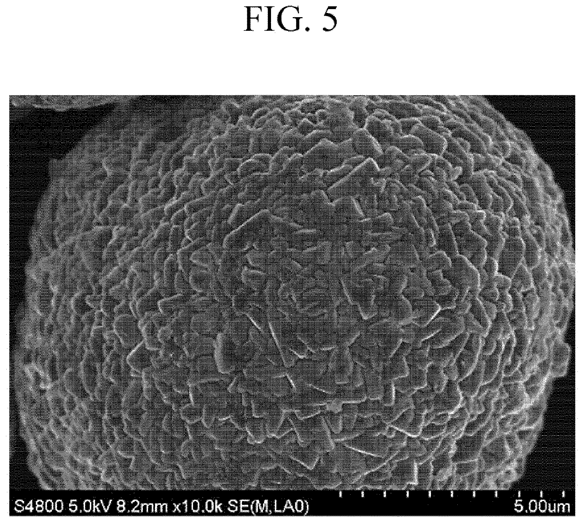

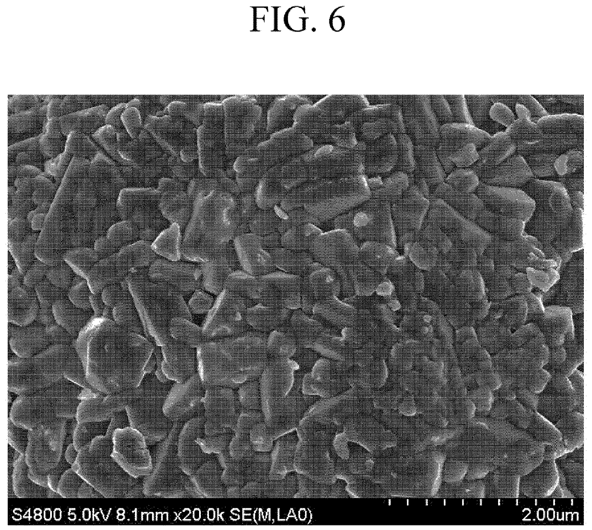

FIGS. 5 and 6 show SEM images of the first positive electrode active material.

### Preparation of Second Positive Electrode Active Material

Ni_{0.75}Mn_{0.23}Al_{0.02}(OH)₂, LiOH, and Al₂O₃ were mixed in a molar ratio of 1:1:0.02 and then heat-treated in a first heating step at 850 °C for 8 hours in an oxygen atmosphere, to prepare a second lithium nickel-manganese-based composite oxide having a composition of LiNi_{0.75}Mn_{0.23}Al_{0.02}O₂ in the form of single particles with an average particle diameter (D₅₀) of about 3 µm.

Aluminium sulfate and yttrium nitrate were added to a distilled water solvent and mixed, then the second lithium nickel-manganese composite oxide was added and mixed for about 45 minutes. Here, an aluminium content of aluminium sulfate was designed to be 0.4 mol%, and an yttrium content of yttrium nitrate was designed and mixed to be 0.05 mol% based on 100 mol% of total metal excluding lithium in the final small particles. The solvent was removed from the mixed solution, and the residue dried at 190 °C, then heat treated in a second heating step at 825 °C for 8 hours in an oxygen atmosphere to prepare a second positive electrode active material.

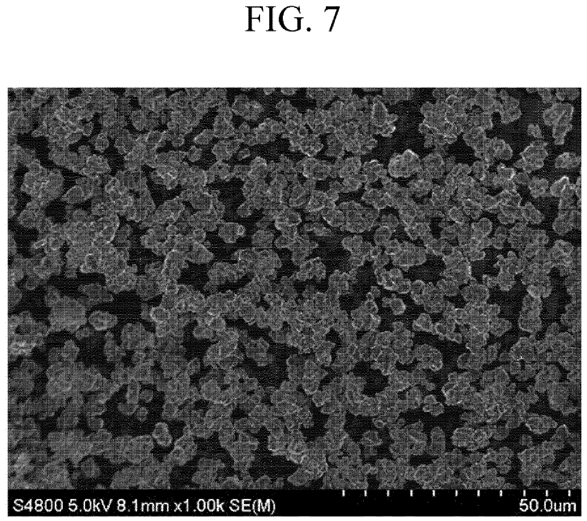

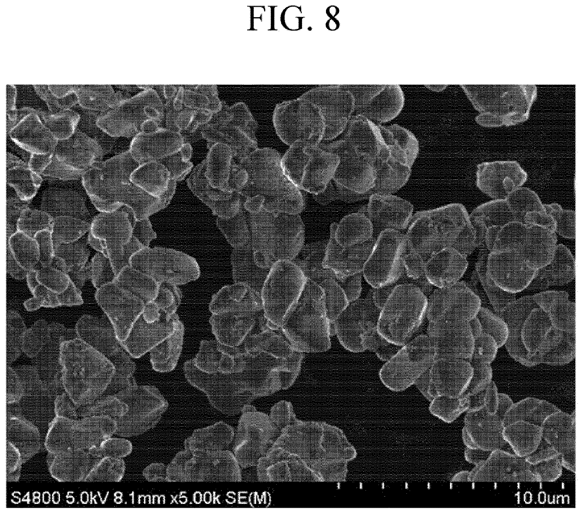

FIGS. 7 and 8 are SEM images of the second positive electrode active material.

### Preparation of Third Positive Electrode Active Material

Ni_{0.25}Mn_{0.75}(OH)₂ and LiOH were mixed to have a Li/(Ni+Mn) molar ratio of about 1.5, and then heat-treated at 950 °C for 24 hours in an oxygen atmosphere, thereby preparing a third positive electrode active material including lithium-manganese-rich composite oxide (Li_{1.5}Ni_{0.25}Mn_{0.75}O₂) in the form of single particles with an average particle diameter (D₅₀) of about 2 µm.

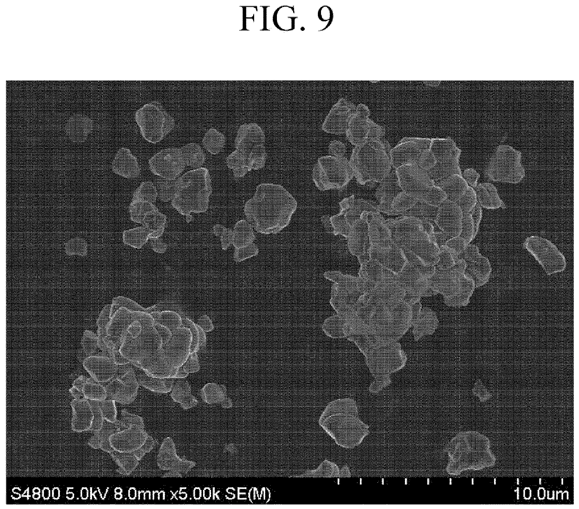

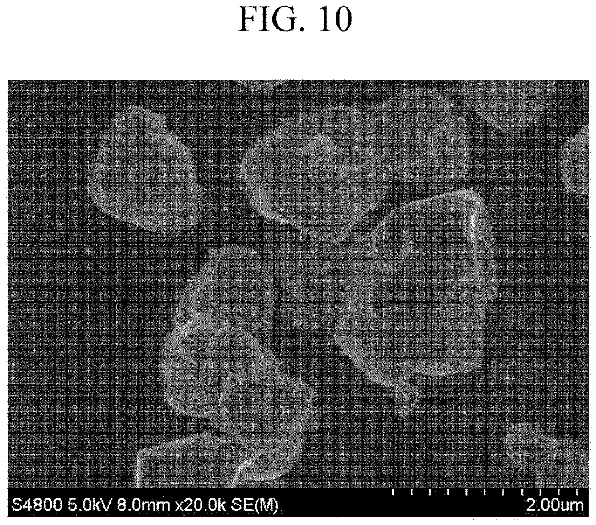

FIGS. 9 and 10 are SEM images showing the third positive electrode active material.

### Preparation of Final Positive Electrode Active Material

66.5 wt% of the first positive electrode active material, 28.5 wt% of the second positive electrode active material, and 5 wt% of the third positive electrode active material were mixed to prepare a final positive electrode active material.

### 2. Manufacturing of Rechargeable Lithium Battery Cell

98.5 wt% of the prepared final positive electrode active material, 1.0 wt% of a polyvinylidene fluoride binder, and 0.5 wt% of a carbon nanotube conductive material were mixed to prepare a positive electrode active material layer slurry. The positive electrode active material layer slurry was coated on an aluminium foil current collector and then dried and compressed to manufacture a positive electrode.

97.5 wt% of a graphite negative electrode active material, 1.5 wt% of carboxymethyl cellulose, and 1 wt% of a styrene butadiene rubber in a water solvent were mixed to prepare a negative electrode active material layer slurry. The negative electrode active material layer slurry was coated on a copper foil current collector and then dried and compressed to manufacture a negative electrode.

A polytetrafluoroethylene separator was used, and an electrolyte solution, prepared by dissolving 1 M LiPF₆ in a mixed solvent of ethylene carbonate and dimethyl carbonate in a volume ratio of 3:7, was used to manufacture a rechargeable lithium battery cell.

### Example 2

A positive electrode active material and a rechargeable lithium battery cell were manufactured substantially in the same manner as in Example 1, except that 63 wt% of the first positive electrode active material, 27 wt% of the second positive electrode active material, and 10 wt% of the third positive electrode active material were mixed to obtain the final positive electrode active material.

### Example 3

A positive electrode active material and a rechargeable lithium battery cell were manufactured substantially in the same manner as in Example 1, except that 59.5 wt% of the first positive electrode active material, 25.5 wt% of the second positive electrode active material, and 15 wt% of the third positive electrode active material were mixed to obtain the final positive electrode active material.

### Example 4

A positive electrode active material and a rechargeable lithium battery cell were manufactured substantially in the same manner as in Example 1, except that 56 wt% of the first positive electrode active material, 24 wt% of the second positive electrode active material, and 20 wt% of the third positive electrode active material were mixed to obtain the final positive electrode active material.

### Example 5

A positive electrode active material and a rechargeable lithium battery cell were manufactured substantially in the same manner as in Example 1, except that 52.5 wt% of the first positive electrode active material, 22.5 wt% of the second positive electrode active material, and 25 wt% of the third positive electrode active material were mixed to obtain the final positive electrode active material.

### Example 6

A positive electrode active material and a rechargeable lithium battery cell were manufactured substantially in the same manner as in Example 1, except that 49 wt% of the first positive electrode active material, 21 wt% of the second positive electrode active material, and 30 wt% of the third positive electrode active material were mixed to obtain the final positive electrode active material.

### Comparative Example 1

A positive electrode active material and a rechargeable lithium battery cell were manufactured substantially in the same manner as in Example 1, except that the first positive electrode active material and the second positive electrode active material alone were used as the final positive electrode active material.

### Comparative Example 2

A positive electrode active material and a rechargeable lithium battery cell were manufactured substantially in the same manner as in Example 1, except that the third positive electrode active material alone was used as the final positive electrode active material.

Each of the manufacturing methods of Examples 1 to 6 and Comparative Examples 1 and 2 is shown in Table 1.

**(Table 1)**

| | Mixing ratio (wt%) | | |
|---|---|---|---|
| | First positive electrode active material | Second positive electrode active material | Third positive electrode active material |
| Example 1 | 66.5 | 28.5 | 5 |
| Example 2 | 63 | 27 | 10 |
| Example 3 | 59.5 | 25.5 | 15 |
| Example 4 | 56 | 24 | 20 |
| Example 5 | 52.5 | 22.5 | 25 |
| Example 6 | 49 | 21 | 30 |
| Comparative Example 1 | 70 | 30 | 0 |
| Comparative Example 2 | 0 | 0 | 100 |

### Evaluation Example 1: Positive Electrode Mixture Density

Each of the positive electrode active materials prepared in Examples 1 to 6 and Comparative Examples 1 and 2 was measured with respect to mixture density according to compression strength, and the results are shown in Table 2.

**(Table 2)**

| | Mixture density (g/cc) |
|---|---|
| Example 1 | 3.49 |
| Example 2 | 3.46 |
| Example 3 | 3.43 |
| Example 4 | 3.41 |
| Example 5 | 3.38 |
| Example 6 | 3.35 |
| Comparative Example 1 | 3.35 |
| Comparative Example 2 | 2.95 |

As shown in Table 2, the positive electrode active materials of Examples 1 to 5 exhibited higher mixture density than those of the comparative examples, whilst Example 6 exhibited the same mixture density as Comparative Example 1 and a higher mixture density than Comparative Example 2.

### Evaluation Example 2: Evaluation of Cell Performance

The rechargeable lithium battery cells of Examples 1 to 6 and Comparative Examples 1 to 2 were initially charged at 4.65 V, and then charged at 4.45 V by lowering the voltage. More specifically, the rechargeable lithium battery cells of Examples 1 to 6 and Comparative Examples 1 to 2 were charged to 4.65 V at a constant current of 0.2 C, subsequently maintained at the voltage until the current became 0.05 C, and then discharged to 2.5 V at the constant current of 0.2 C at 25 °C to proceed with first charging and discharging. Subsequently, the cells were charged to 4.45 V at the constant current of 0.2 C, subsequently maintained at the voltage until the current became 0.05 C, and then discharged to 2.5 V at the constant current of 0.2 C at 25 °C to proceed with a second charging and discharging. In Table 3, second discharge capacity is provided as "4.45 V capacity".

Subsequently, the cells were repeatedly charged and discharged at least 50 times at 1.0 C within a voltage range of 3.0 V to 4.45 V at 45 °C to calculate a ratio of 50^{th} cycle discharge capacity to the second discharge capacity, which is provided as "4.45 V cycle-life" in Table 3.

Then, the cells were charged and discharged at a rate of 0.2 C/0.2 C within a voltage range of 3.0 V to 4.45 V at 25 °C to calculate energy density. The energy density was obtained by using a calculation equation of {average driving voltage (V) x capacity (Ah)/cell weight (kg)}, wherein the capacity was calculated by multiplying a positive electrode weight (g) and discharge capacity (mAh/g).

**(Table 3)**

| | 4.45V capacity (mAh/g) | 4.45V cycle-life (%, @50cyc) | Energy density (Wh/kg) |
|---|---|---|---|
| Example 1 | 196.5 | 97.9 | 743.3 |
| Example 2 | 197.9 | 98.0 | 747.2 |
| Example 3 | 199.3 | 98.0 | 751.1 |
| Example 4 | 200.7 | 97.8 | 752.6 |
| Example 5 | 202.1 | 97.6 | 755.8 |
| Example 6 | 203.5 | 97.5 | 756.9 |
| Comparative Example 1 | 195.1 | 97.5 | 739.4 |
| Comparative Example 2 | 223.0 | 97.5 | 814.0 |

As shown in Table 3, Examples 1 to 6, compared to Comparative Example 1, exhibited equivalent or improved cycle-life characteristics and high energy density, which confirmed that utilization of the positive electrodes was improved. However, although Comparative Example 2 exhibited higher energy density than Examples 1 to 6, as described above in Evaluation Example 1, Comparative Example 2 h ad a disadvantage of very low mixture density. Accordingly, the rechargeable lithium battery cells of Examples 1 to 6 were comprehensively much improved compared to the rechargeable lithium battery cells of Comparative Examples 1 and 2.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

Embodiments are set out in the following clauses:
Clause 1. A positive electrode active material comprising: (a) a first positive electrode active material including a layered lithium nickel-manganese-based composite oxide and being in a form of secondary particles in which a plurality of primary particles are agglomerated; (b) a second positive electrode active material including a layered lithium nickel-manganese-based composite oxide, having a smaller average particle diameter (D₅₀) than the first positive electrode active material, and being in a form of single particles; and (c) a third positive electrode active material including a lithium-manganese-rich composite oxide in which a molar ratio of lithium to a total metal excluding lithium is about 1.1 to about 3 and a manganese content based on 100 mol% of a total metal excluding lithium is greater than or equal to about 60 mol%, and being in a form of single particles.
Clause 2. The positive electrode active material of Clause 1, wherein based on a total of 100 wt% of the first positive electrode active material, the second positive electrode active material, and the third positive electrode active material, the first positive electrode active material is included in an amount of about 30 wt% to about 90 wt%, the second positive electrode active material is included in an amount of about 5 wt% to about 40 wt%, and the third positive electrode active material is included in an amount of about 5 wt% to about 30 wt%.
Clause 3. The positive electrode active material of Clause 1 or Clause 2, wherein the layered lithium nickel-manganese-based composite oxide has a nickel content of about 60 mol% to about 80 mol% and a manganese content of greater than or equal to about 15 mol% based on 100 mol% of a total metal excluding lithium.
Clause 4. The positive electrode active material of any preceding Clause, wherein the layered lithium nickel-manganese-based composite oxide further includes aluminium and an aluminium content is about 1 mol% to about 3 mol% based on 100 mol% of a total metal excluding lithium.
Clause 5. The positive electrode active material of Clause 4, wherein in the layered lithium nickel-manganese-based composite oxide, a concentration of the aluminium is uniform.
Clause 6. The positive electrode active material of any preceding Clause, wherein in the layered lithium nickel-manganese-based composite oxide, a cobalt content is about 0 mol% to about 0.01 mol% based on 100 mol% of a total metal excluding lithium.
Clause 7. The positive electrode active material of any preceding Clause, wherein the layered lithium nickel-manganese-based composite oxide is represented by Chemical Formula 1:

   [Chemical Formula 1] Liₐ₁Niₓ₁Mn_{y1}Al_{z1}M¹w₁O_{2-b1}X_{b1}

   wherein, in Chemical Formula 1, 0.9≤a1 ≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more element selected from Al, B, Ba, Ca, Ce, Cr, Fe, Mg, Mo, Nb, Si, Sn, Sr, Ti, V, W, and Zr, and X is one or more element selected from F, P, and S.
Clause 8. The positive electrode active material of any preceding Clause, wherein the first positive electrode active material has an average particle diameter (D₅₀) of about 10 µm to about 25 µm.
Clause 9. The positive electrode active material of any preceding Clause, wherein the first positive electrode active material includes core particles in the form of secondary particles in which a plurality of primary particles are agglomerated; and a coating layer located on the surface of the core particle, and including Al.
Clause 10. The positive electrode active material of any preceding Clause, wherein the second positive electrode active material has an average particle diameter (D₅₀) of about 0.5 µm to about 8 µm.
Clause 11. The positive electrode active material of any preceding Clause, wherein the second positive electrode active material includes core particles in a form of single particles and a coating layer located on the surface of the core particle and including Al, Y, or a combination thereof.
Clause 12. The positive electrode active material of any preceding Clause, wherein the lithium-manganese-rich composite oxide of the third positive electrode active material is represented by Chemical Formula 2:

   [Chemical Formula 2] Li₁₊ₓ₂(Ni_{y2}Mn_{z2}M²_{1-y2-z2})₁₋ₓ₂O_{2-b2}X_{b2}

   wherein, in Chemical Formula 2, 0.04≤x2≤0.5, 0.1≤y2≤0.5, 0.5≤z2≤0.9, and 0≤b2≤0.1, M² is one or more element selected from Al, B, Ba, Ca, Ce, Cr, Fe, Mg, Mo, Nb, Si, Sn, Sr, Ti, V, W, Y, and Zr, and X is one or more element selected from F, P, and S.
Clause 13. The positive electrode active material of any preceding Clause, wherein in the lithium-manganese-rich composite oxide of the third positive electrode active material, a cobalt content is about 0 mol% to about 0.01 mol% based on 100 mol% of a total metal excluding lithium.
Clause 14. The positive electrode active material of any preceding Clause, wherein the third positive electrode active material has an average particle diameter (D₅₀) of about 0.1 µm to about 5 µm.
Clause 15. The positive electrode active material of any preceding Clause, wherein an average particle diameter (D₅₀) of the third positive electrode active material is smaller than an average particle diameter (D₅₀) of the second positive electrode active material.
Clause 16. A positive electrode, comprising: a positive electrode current collector, and a positive electrode active material layer on the positive electrode current collector, wherein the positive electrode active material layer includes the positive electrode active material of any of Clauses 1 to 15.
Clause 17. The positive electrode of Clause 16, wherein the positive electrode active material layer has a density of about 3.3 g/cc to about 3.7 g/cc.
Clause 18. A rechargeable lithium battery, comprising: (a) the positive electrode of Clause 16 or Clause 17, (b) a negative electrode, and (c) an electrolyte.
Clause 19. The rechargeable lithium battery of Clause 18, wherein an initial charging upper limit voltage is greater than or equal to about 4.60 V, and a subsequent charging upper limit voltage is lower than the initial charging upper limit voltage and is greater than or equal to about 4.45 V.
Clause 20. The rechargeable lithium battery of Clause 18 or Clause 19, wherein the negative electrode includes a carbon-based negative electrode active material, a lithium metal, a lithium metal alloy, a silicon-based negative electrode active material, or a combination thereof.

### Reference Numerals

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising:
a first positive electrode active material including a first layered lithium nickel-manganese-based composite oxide, the first positive electrode active material being in a form of secondary particles in which a plurality of primary particles are agglomerated;
a second positive electrode active material including a second layered lithium nickel-manganese-based composite oxide, the second positive electrode active material having a smaller average particle diameter (D₅₀) than the first positive electrode active material, and the second positive electrode active material being in a form of single particles; and
a third positive electrode active material including a lithium-manganese-rich composite oxide in which a molar ratio of lithium to a total metal content of the lithium-manganese-rich composite oxide excluding lithium is about 1.1 to about 3 and a manganese content based on 100 mol% of the total metal content of the lithium-manganese-rich composite oxide excluding lithium is greater than or equal to about 60 mol%, and the third positive electrode active material being in a form of single particles.

2. The positive electrode active material as claimed in claim 1, wherein based on a total of 100 wt% of the first positive electrode active material, the second positive electrode active material, and the third positive electrode active material, the first positive electrode active material is included in an amount of about 30 wt% to about 90 wt%, the second positive electrode active material is included in an amount of about 5 wt% to about 40 wt%, and the third positive electrode active material is included in an amount of about 5 wt% to about 30 wt%.

3. The positive electrode active material as claimed in claim 1 or claim 2, wherein (a) the first and/or second layered lithium nickel-manganese-based composite oxide(s) has a nickel content of about 60 mol% to about 80 mol% and a manganese content of greater than or equal to about 15 mol% based on 100 mol% of a total metal content of said layered lithium nickel-manganese-based composite oxide excluding lithium, and/or wherein (b) the first and/or second layered lithium nickel-manganese-based composite oxide(s) further includes aluminium, a content of which is about 1 mol% to about 3 mol% based on 100 mol% of a total metal content of said layered lithium nickel-manganese-based composite oxide excluding lithium, optionally wherein the aluminium is evenly distributed in said layered lithium nickel-manganese-based composite oxide.

4. The positive electrode active material as claimed in any preceding claim, wherein a cobalt content in the first and/or second layered lithium nickel-manganese-based composite oxide is about 0 mol% to about 0.01 mol% based on 100 mol% of a total metal of said layered lithium nickel-manganese-based composite oxide excluding lithium.

5. The positive electrode active material as claimed in any preceding claim, wherein the first and/or second layered lithium nickel-manganese-based composite oxide is represented by Chemical Formula 1:
Chemical Formula 1 Liₐ₁Niₓ₁Mn_{y1}Al_{z1}M¹w₁O_{2-b1}X_{b1}
wherein, in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, Zn and Zr, and X is one or more elements selected from F, P, and S.

6. The positive electrode active material as claimed in any preceding claim, wherein the first positive electrode active material has an average particle diameter (D₅₀) of about 10 µm to about 25 µm, and/or wherein the first positive electrode active material includes core particles in the form of secondary particles in which a plurality of primary particles are agglomerated; and a coating layer on the surfaces of the core particles, the coating layer including Al.

7. The positive electrode active material as claimed in any preceding claim, wherein the second positive electrode active material has an average particle diameter (D₅₀) of about 0.5 µm to about 8 µm, and/or wherein the second positive electrode active material includes core particles in a form of single particles and a coating layer on the surfaces of the core particles, and the coating layer including Al, Y, or a combination of Al and Y.

8. The positive electrode active material as claimed in any preceding claim, wherein the lithium-manganese-rich composite oxide of the third positive electrode active material is represented by Chemical Formula 2:
Chemical Formula 2 Li₁₊ₓ₂(Ni_{y2}Mn_{z2}M²_{1-y2-z2})₁₋ₓ₂O_{2-b2}X_{b2}
wherein, in Chemical Formula 2, 0.04≤x2≤0.5, 0.1≤y2≤0.5, 0.5≤z2≤0.9, 0.9≤y2+z2≤1.1, and 0≤b2≤0.1, M² is one or more elements selected from Al, B, Ba, Ca, Ce, Cr, Fe, Mg, Mo, Nb, Si, Sn, Sr, Ti, V, W, Y, Zn and Zr, and X is one or more elements selected from F, P, and S.

9. The positive electrode active material as claimed in any preceding claim, wherein a cobalt content of the lithium-manganese-rich composite oxide of the third positive electrode active material is about 0 mol% to about 0.01 mol% based on 100 mol% of the total metal content of the lithium-manganese-rich composite oxide excluding lithium.

10. The positive electrode active material as claimed in any preceding claim, wherein the third positive electrode active material has an average particle diameter (D₅₀) of about 0.1 µm to about 5 µm, and/or wherein an average particle diameter (D₅₀) of the third positive electrode active material is smaller than an average particle diameter (D₅₀) of the second positive electrode active material.

11. A positive electrode, comprising:
a positive electrode current collector, and
a positive electrode active material layer on the positive electrode current collector,
wherein the positive electrode active material layer includes the positive electrode active material as claimed in any of claims 1 to 10.

12. The positive electrode as claimed in claim 11, wherein the positive electrode active material layer has a density of about 3.3 g/cc to about 3.7 g/cc.

13. A rechargeable lithium battery, comprising:
the positive electrode as claimed in claim 11 or claim 12,
a negative electrode, and
an electrolyte.

14. The rechargeable lithium battery as claimed in claim 13, wherein an initial charging upper limit voltage is greater than or equal to about 4.60 V, and wherein a subsequent charging upper limit voltage is lower than the initial charging upper limit voltage and is greater than or equal to about 4.45 V.

15. The rechargeable lithium battery as claimed in claim 13 or claim 14, wherein the negative electrode includes at least one of a carbon-based negative electrode active material, a lithium metal, a lithium metal alloy, a silicon-based negative electrode active material.
